(19) Europäisches Patentamt / European Patent Office / Office européen des brevets

(11) **EP 2 786 960 A1**

(12) # EUROPEAN PATENT APPLICATION

(43) Date of publication:
**08.10.2014 Bulletin 2014/41**

(51) Int Cl.:
**B67D 1/12** (2006.01)   **B67D 1/14** (2006.01)
**F16K 15/06** (2006.01)   **G05D 16/18** (2006.01)

(21) Application number: **13162501.4**

(22) Date of filing: **05.04.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Carlsberg Breweries A/S**
**1799 Copenhagen V (DK)**

(72) Inventors:
• **Rasmussen, Jan Nørager**
  **3650 Ølstykke (DK)**
• **Vesborg, Steen**
  **2820 Gentofte (DK)**
• **Christiansen, Jonas**
  **2860 Søborg (DK)**

(74) Representative: **Budde Schou A/S**
**Hausergade 3**
**1128 Copenhagen K (DK)**

(54) **Constant flow rate throttle for a beer dispenser**

(57)    The present invention relates to a beverage dispensing system for dispensing a carbonated beverage. The beverage dispensing system comprises a beverage container defining an inner space for holding the carbonated beverage at an elevated pressure exceeding the ambient atmospheric pressure, a dispensing device for dispensing the beverage from the inner space of the beverage container, and a constant flow rate controller having an inlet in fluid communication with the inner space of the beverage container and an outlet in fluid communication with the dispensing device. The constant flow rate controller has a first position defining a maximum effective flow area between the inlet and the outlet and a second position defining a minimum effective flow area between the inlet and the outlet. The constant flow rate controller shifts gradually during dispensing beverage towards the second position with an increasing pressure difference between the inlet and the outlet and towards the first position with a decreasing pressure difference between the inlet and the outlet

FIG. 3A   FIG. 3B

**Description**

Background

Carbonated beverages, such as beers and soft drinks, are typically provided at elevated pressure in pressure proof containers such as cans or kegs. Once the keg or can has been opened, the pressure reduction in the container will cause the carbon dioxide dissolved in the beverage to escape. After some time, such as a few hours, the escape of carbon dioxide ($CO_2$) will cause the beverage to become unsuitable for drinking for the beverage consumer, since it will assume a flat and less flavoured taste. For non-professional users, such as households and similar private users, carbonated beverages are typically provided in small containers such as bottles or cans which are suitable for a single serving of beverage and have a volume around 0.25-1.5 litres.

Professional users such as bars and restaurants and similar establishments having a large turnover of carbonated beverages may use a beverage dispensing system intended for multiple servings of beverage instead of individual bottles and cans. Professional beverage dispensing systems typically use large beverage containers, such as kegs, which are connected to a carbon dioxide source for carbonating the beverage and for maintaining a pressure inside the beverage container while dispensing the beverage through a tapping device. Thus, the level of carbon dioxide in the beverage may be held constant while at the same time oxygen is prevented from entering the container.

Professional beverage dispensing systems typically operate with large containers or kegs, which may contain 10-50 litres or more of beverage. Smaller and portable beverage dispensing systems for private or professional use may typically contain 5-10 litres of beverage. One example of a beverage dispensing system is the DraughtMaster™ system provided by the applicant company and described in the PCT applications WO2007/019848, WO2007/019849, WO2007/019850, WO2007/019851 and WO2007/019853. The DraughtMaster™ system seals the beverage container from the surrounding oxygen and provides pressurization and cooling to avoid loss of carbon dioxide and deterioration of the beverage.

In the last decade, so called mini-kegs or party-kegs have become increasingly popular and a need for such mini-kegs having a size between about 1 litre and 10 litres have thus appeared. Such mini-keg may be used when providing beverage at minor social events, such as private parties, family events and conferences etc. Mini-kegs may also be used in professional beverage dispensing establishments, such as for smaller professional establishments, establishments lacking access to pressurization sources and establishments where highly pressurized containers may be unsuitable, such as in airplanes and other means of transportation. A mini-keg is a cheap and single-use beverage dispensing system for providing a larger amount of beverage than allowed in a can while not requiring the consumer to invest in a reusable beverage dispensing system. The mini-keg allows multiple beverage servings without loss of carbonisation or flavour even if some time is allowed to pass between the servings. It also gives the user the option of choosing the amount of beverage for each serving.

Typically, state of the art mini-kegs constitute single use beverage dispensing systems and include a tapping device for dispensing the beverage and a carbon dioxide canister for keeping the beverage in the mini-keg in a suitable drinking condition over an extended time period such as several days or weeks, even if the mini-keg has been opened. For avoiding loss of carbonisation and flavour, mini-kegs include a carbonisation canister for keeping a pressurized carbon dioxide atmosphere inside the keg and compensate for pressure loss due to beverage dispensing. Such mini-kegs typically have a volume ranging between the professional kegs and the single-use cans, such as 2-15 litres or 3-10 litres and in particular 5 litres. Furthermore, mini-kegs are known in which no carbon dioxide regulation is included. One example of such a mini-keg is found in the applicant company's international application WO2011/157786 which discloses a cheap and simple self pressurizing beverage dispensing system.

Further examples of self-pressurizing beverage containers are found in European patent publications EP 1 737 759 and EP 1 170 247. Both the above known technologies make use of commercially available $CO_2$ canisters containing pressurized $CO_2$ (carbon dioxide) and a pressure regulation mechanism. The $CO_2$ canisters release $CO_2$ via the pressure regulator, which is used for pressurizing the beverage and the beverage container as the pressure is reduced due to the dispensing of the beverage as well as due to leakage during storage of the beverage container in-between servings. To be able to generate a suitable amount of $CO_2$ from a small canister to pressurize a significantly larger beverage container, the canister must have a high pressure. The above-mentioned publications suggest the use of a filler material such as activated carbon for reducing the pressure inside the canister.

Such mini-kegs as described above typically have either a very simple pressure regulating mechanism or no pressure regulating mechanism at all. When using no pressure regulating mechanism, it is evident that the pressure within the beverage container will slowly decrease as the beverage is being dispensed since the dispensed beverage should be replaced by gas from the canister and it is evident that the pressure in the canister will decrease as well as the gas stored in the canister is flowing into the container. The use of filler material, such as active carbon or other adsorbers, will ensure that the pressure drop during dispensing is limited. However, in order to ensure a substantially constant pressure during the complete dispensing of the beverage in the beverage container, the canister should be very large and contain a very large amount of filler material. This would not be cost efficient and therefore most such systems allow a pressure drop of at least a few bars during the complete dispensing of the beverage.

A pressure mechanism may be used for ensuring that the pressure within the beverage container remains within certain limits even when using a high pressurized canister. In case a pressure regulating mechanism is used, for several reasons, the pressure within the beverage container may still vary significantly. The pressure regulating mechanism typically used for single use mini-kegs are cheap and therefore by nature very primitive. In some cases the pressure difference between the outside and the inside of the container is monitored by means of a flexible membrane and in case the difference is above a certain limit, the membrane will cause the canister to release gas into the beverage container. Such simple pressure regulating mechanisms will not be very accurate and be very sensitive to pressure fluctuations, especially when used in connection with a small mini-keg having a tiny head space. Thus, even when a pressure regulating mechanism is used, the beverage dispensing system may allow a pressure drop of at least a few bars during the complete dispensing of the beverage.

Most beverages have an optimal dispensing pressure. A too high dispensing pressure will cause the beverage to become foamy when being dispensed due to the high fluid velocities through the dispensing tap, i.e. develop a large amount of bubbles filling the entire beverage glass. On the contrary, a too low dispensing pressure will cause the beverage to flow very slowly and fail to develop any foamy head at all. At an optimal dispensing pressure will allow the user to dispense a proper draft beer having a foamy head of a few centimetres above the beverage surface. To achieve such optimal dispensing behaviour, the dispensing pressure must be carefully determined depending on the type of beverage and the properties of the dispensing device.

The problem of excessive foaming when dispensing a carbonated beverage from a party keg have been investigated in the prior art. EP 1 648 813 B1 discloses a foam throttle having a labyrinth channel being open towards the interior of the container and ending in a passage opening at the other end.

Further prior art includes DE 19 802 291 which relates to a coil shaped pressure release channel in which a beverage may flow between a connector and a tap.

Summary of the invention

For the reasons stated above, it is contemplated that although it may be possible it would not be cost efficient to design a beverage dispensing system having a constant or even substantially constant pressure during the complete dispensing of the beverage in the beverage container. It is therefore an object according to the present invention to provide a beverage dispensing system preventing excessive foaming during the complete dispensation of the beverage while still allowing a proper dispensing velocity and head formation.

It is a further object according to the present invention to provide a beverage dispensing system in which the dispensing of beverage is established in a substantially non-varying flow or at a constant flow as the flow of dispensed beverage is substantially non-varying from the point of time of initiating dispensing beverage until the dispensing of beverage is stopped. In addition, the substantially non-varying flow or constant flow rate also provides a substantially non-varying flow rate during the dispensing of beverage from the dispensing of beverage from a fresh container until the container is emptied.

Further, it is common to use the same dispensing pressure as the internal pressure of the beverage to be dispensed. In this way it may be ensured that the beverage will not be over- or under-carbonized during storage and dispensing. However, this pressure may not be optimal for dispensing since sometimes the internal pressure of the beverage is higher than the dispensing pressure. It is therefore an advantage according to the present invention to be able to have a higher elevated pressure inside the beverage container than the dispensing pressure.

The above need, the above object and the above advantage together with numerous other needs, objects and advantages, which will be evident from the below detailed description, are according to a first aspect of the present invention obtained by a beverage dispensing system for dispensing a carbonated beverage, the beverage dispensing system comprising:

a beverage container defining an inner space for holding the carbonated beverage at an elevated pressure exceeding the ambient atmospheric pressure,

a dispensing device for dispensing the beverage from the inner space of the beverage container, and

a constant flow rate controller having an inlet in fluid communication with the inner space of the beverage container and an outlet in fluid communication with the dispensing device, the constant flow rate controller having a first position defining a maximum effective flow area between the inlet and the outlet and a second position defining a minimum effective flow area between the inlet and the outlet, the constant flow rate controller shifting gradually during dispensing beverage towards the second position with an increasing pressure difference between the inlet and the outlet and towards the first position with a decreasing pressure difference between the inlet and the outlet.

In the present context the term "constant flow" is to be considered a generic term encompassing not only the strict physical non-varying flow, but also flows which may be considered basically non-varying or considered by the user while dispensing beverage to be non-varying from the time the dispensing of beverage is initiated until the dispensing of beverage is stopped.

The beverage dispensing system is typically a mini-keg or party-keg system for dispensing a carbonated beverage such as beer, however, the teachings according to the present invention may as well be applied to larger systems and even professional systems having a less accurate pressurized gas supply.

The beverage container thus typically has a size of 1-10 litres, preferably 3-7 litres, but may be larger up to several hundreds of litres. The elevated pressure may be different for different beverages and systems, however, often the elevated pressure corresponds to about the internal gas pressure of the beverage or slightly higher. The elevated pressure thus typically is about 2-3 bar above the atmospheric pressure. The beverage is located in the beverage space in the container. The container may also comprise a small head space which is increasing during the beverage dispensing operation. Further, so called bag in keg systems in which the beverage is stored in a bag inside a rigid, pressurized container such that the gas has no direct access to the beverage may be contemplated.

The dispensing device should be adapted for shifting the beverage dispensing system between beverage dispensing and non-beverage dispensing. When the dispensing device is set to beverage dispensing, the beverage will flow from the outlet of the constant flow rate controller via the dispensing device to the user outside of the beverage dispensing system.

The constant flow rate controller may be communicating with a riser pipe in order to be able to allow the beverage to flow into the inlet of the flow restricting valve by means of the pressure acting on the beverage. Alternatively, a bag in keg having a flexible bag within the container holding the beverage, may be used. The pressure in the container causes the bag to crumple as the beverage is dispensed.

In the first position of the constant flow rate controller, the effective flow area between the inlet and the outlet is maximized, whereas in the second position of the constant flow rate controller the effective flow area between the inlet and the outlet is minimized. The effective flow area is understood to mean the limited cross sectional area at the constant flow rate controller through which the beverage may flow. The constant flow rate controller should constitute the smallest effective flow area between the beverage container and the dispensing device and thus determines the effective flow area of the flow path between the beverage container and the dispensing device. During the non-beverage dispensing, i.e. when the dispensing device is preventing beverage to flow from the beverage container to the outside, the beverage dispensing system is at rest and the pressure difference between the inlet and outlet of the constant flow rate controller is zero. The constant flow rate controller will thus assume the first position, i.e. defining a maximum effective flow area between the inlet and the outlet. During the beverage dispensing, i.e. when the dispensing device is allowing beverage to flow from the beverage container to the outside, the beverage will flow through the constant flow rate controller and the pressure between the inlet and the outlet of the constant flow rate controller will be non-zero.

When the elevated pressure inside the beverage container is increasing, the pressure between the inlet and the outlet of the constant flow rate controller will be increasing as well during the dispensing of beverage, assuming a constant ambient atmospheric pressure outside the container. This causes the constant flow rate controller to shift gradually to the second position while the pressure is increasing during the dispensing of beverage. At a very high pressure difference between the inlet and the outlet, contemplated to be the maximum possible pressure within the beverage container, the constant flow rate controller will assume the second position, i.e. defining the minimum effective flow area between the inlet and the outlet during the dispensing of beverage. Conversely, when the elevated pressure inside the beverage container is decreasing, the pressure between the inlet and the outlet of the constant flow rate controller will be decreasing as well. This causes the constant flow rate controller to shift gradually to the first position while the pressure is decreasing.

Provided the dispensing device is allowing beverage dispensing, the beverage will always flow from higher pressure, i.e. the container, to lower pressure, i.e. the ambient outside the dispensing device. A smaller effective flow area will allow a smaller volume flow rate. The volume flow rate through the flow rate controller is thus depending on the effective flow area and the differential pressure between the inlet and the outlet. Many other factors influence the volume flow rate, such as turbulence and compressibility of the beverage. Turbulence may be reduced by using smooth boundaries of the constant flow rate controller. In order to dimension the constant flow rate controller, a CFD (Computational Fluid Dynamics) computer simulation may be performed. An approximated value of the volume flow rate may be derived from the continuity equation as the effective flow area times the velocity of the flow:

$$\frac{dV}{dt} = A \cdot v$$

The velocity of the flow from the inlet to the outlet may be derived from Bernoulli's equation:

$$p_1 + \sigma \cdot g \cdot y_1 + \frac{1}{2} \cdot \sigma \cdot v_1^2 = p_2 + \sigma \cdot g \cdot y_2 + \frac{1}{2} \cdot \sigma \cdot v_2^2$$

where p is the pressure, p is the density, y is the height and v is the velocity at the respective inlet and outlet.

A higher differential pressure yields a higher flow rate, however, this is counteracted by the smaller effective flow area, and vice versa. The flow rate through the constant flow rate controller will thus be approximately constant independent of the pressure in the beverage container, assuming a constant ambient atmospheric pressure outside the dispensing device. The constant flow rate for any specific beverage dispensing setup may be empirically determined in order to achieve the proper dispensing characteristics, i.e. achieve the proper foaming.

Preferably, all parts of the beverage dispensing system are made of plastics in order for the system to be easily recyclable after use. In order to avoid the generation of excessive turbulence, all parts of the constant flow rate controller may be rounded, i.e. lacking any sharp edges which may provoke a flow separation and thereby initiate turbulence.

According to a further embodiment of the first aspect of the present invention, the constant flow rate controller comprises an orifice and a flow controlling member partially covering the orifice, the flow controlling member being movable between the first position, in which the flow controlling member and the orifice establish the maximum flow area between the inlet and the outlet, and the second position, in which the flow controlling member and the orifice establish the minimum flow area between the inlet and the outlet.

The orifice is connecting the inlet and the outlet of the constant flow rate controller. The flow controlling member is located between the inlet and the outlet of the valve and is movable in order for the constant flow rate controller to vary between the maximum flow area and the minimum effective flow area. When the pressure in the beverage container is increasing during dispensing, the flow controlling member is pushed by the pressure generated beverage flow to cover an increasing part of the orifice thereby establishing the minimum effective flow area. When the pressure in the beverage container is decreasing during dispensing, the flow controlling member is moving away from the orifice such that it covers a decreasing part of the orifice.

According to a further embodiment of the first aspect of the present invention, the flow controlling member constitutes a spring loaded member being responsive to the pressure difference between the inlet and the outlet. The spring loaded member may be situated in the flow path through the orifice such that an increasing pressure difference will cause the flow controlling member to move towards the orifice thereby increasing the load on the spring and decreasing the effective flow area. When the differential pressure decreases, the loaded spring causes the flow controlling member to move away from the orifice, thereby decreasing the load of the spring and increasing the effective flow area.

According to a further embodiment of the first aspect of the present invention, the flow controlling member constitutes an elastic member being responsive to the pressure difference between the inlet and the outlet. The elastic member may be situated adjacent the orifice, partially covering the orifice and defining a slight angle towards the interior of the beverage container. When the pressure difference between the inlet and the outlet increases, the elastic member is bent towards the orifice and will thus cover a greater part of the orifice, thereby establishing a smaller effective flow area. When the pressure difference decreases, the elastic member will return due to its resilience to a position in which a smaller part of the orifice is covered by the elastic member, thereby establishing a larger effective flow area.

According to a further embodiment of the first aspect of the present invention, the flow controlling member comprises further elastic members, preferably 1 further elastic member, alternatively more elastic members such as 5-50 or 2, 3 or 4 further elastic members. Several elastic members may be used in order to establish a more well defined effective flow area. The use of several elastic members may also improve the flow characteristics through the constant flow rate controller in order to avoid excessive turbulence.

According to a further embodiment of the first aspect of the present invention, the orifice defines a rectangular shape or alternatively a circular shape. A rectangular shape may be simpler to manufacture by molding, however, a circular shape may be less prone to generate turbulence. Alternative geometrical configurations may comprise polygonal shapes such as triangular, quadrangular, pentagonal, hexagonal etc. shapes, elliptical or alternatively curved shapes or combinations thereof. An increase in turbulence may increase the foam generation.

According to a further embodiment of the first aspect of the present invention, the constant flow rate controller further comprises a beverage laminar flow conduit establishing fluid communication from the outlet of the constant flow rate controller to the dispensing device, the beverage laminar flow conduit defining an effective flow area being larger than the maximum effective flow area. After passing the outlet, the beverage flow will have been subjected to a pressure induced increase in velocity, in particular at the location of the smallest effective flow area. In case the beverage flow thereafter is allowed to flow out of the dispensing device directly, the turbulence may not have settled and the rapid decrease in pressure may cause the beverage to generate an excessive amount of foam upon entering the beverage glass. In order to avoid the above and reduce the amount of turbulence within the beverage, the laminar flow conduit is connected between the outlet and the dispensing device. The laminar flow conduit should have an effective flow area in the same magnitude and slightly larger than the effective flow area between the inlet and the outlet in order to prevent a too rapid expansion of the beverage. The laminar flow conduit should have a sufficient length in order to allow a slow expansion of the beverage. The laminar flow conduit should preferably have a substantially uniform effective flow area.

According to a further embodiment of the first aspect of the present invention, the beverage laminar flow conduit defines a meandering shape. In order to allow the laminar flow conduit to have a sufficient length while still allowing a compact shape of the beverage dispensing system, the laminar flow conduit may have a meandering shape.

According to a further embodiment of the first aspect of the present invention, the beverage laminar flow conduit defines an effective flow area being 1.01 to 100, preferably 1.1 to 50, more preferably 1.2 to 20, most preferably 1.5 to 10 times larger than the maximum flow area, or alternatively, 1.01, 1.1, 1.2 or 1.5 times larger than the maximum flow area. By using the above relations, preferably the smaller relations, between the effective flow area of the laminar flow conduit and the maximum effective flow area between the inlet and the outlet, the beverage will remain at least slightly pressurized within the laminar flow conduit and will therefore not expand immediately after the outlet.

According to a further embodiment of the first aspect of the present invention, the beverage laminar flow conduit further defines a flow distance between the outlet and the dispensing device, the flow distance being at least 10, preferably 20, more preferably 50, most preferably 100, times larger the diameter of the beverage laminar flow conduit. By allowing the laminar flow conduit to be sufficiently long, the pressure gradient between the outlet and the dispensing device will be small. In this way the increase in velocity will be very small and the expansion of the beverage will occur slowly. In this way, the beverage is allowed to rest and the amount of turbulence is reduced, resulting in less foam appearing during dispensing.

According to a further embodiment of the first aspect of the present invention, the dispensing device is sealed by a rupturable membrane, preferably an aluminum membrane or a plastic membrane. In this way the dispensing device may initially be in a non dispensing position and sealed off in a hygienic way. When the rupturable membrane is ruptured or otherwise removed, the beverage dispensing may initiate.

According to a further embodiment of the first aspect of the present invention, the dispensing device constitutes a beverage tap for controlling the dispensing of the beverage. A beverage tap, i.e. a user controllable valve, may be used to shift the dispensing device between the dispensing position and the non-dispensing position. When in the non-dispensing position, i.e. the valve is closed, the pressure difference between the inlet and the outlet of the constant flow rate controller will be zero. When the dispensing device is in the dispensing position, the beverage will flow from the beverage container to the outside through the dispensing device and thus the pressure difference between the inlet and the outlet will be non-zero.

According to a further embodiment of the first aspect of the present invention, the effective flow area between the inlet and the outlet is inversely proportional to the pressure difference between the inlet and the outlet. The effective flow area will thus decrease with an increasing pressure difference and decrease with an increasing pressure difference.

According to a further embodiment of the first aspect of the present invention, wherein the constant flow rate controller is made as a single molded plastic component or alternatively integrated into the overall structure.

The above need, the above object and the above advantage together with numerous other needs, objects and advantages, which will be evident from the below detailed description, are according to a first aspect of the present invention obtained by a method of dispensing a carbonated beverage from a beverage container holding the carbonated beverage at an elevated pressure exceeding the ambient atmospheric pressure to a dispensing device, the method comprising:

providing a constant flow rate controller defining an inlet in fluid communication with the beverage and an outlet located opposite the inlet, and
dispensing the beverage thereby gradually decreasing the elevated pressure causing the constant flow rate controller to move from a second position defining a minimum flow area between the inlet and the outlet of the constant flow rate controller towards a first position defining a maximum flow area between the inlet and the outlet of the constant flow rate controller.

The above method according to the second aspect is preferably used together with any of the embodiments of the system according to the first aspect. Typically, when using a gas canister having a filler but lacking a regulator, the elevated pressure within the beverage container is highest at the beginning of beverage dispensing since the canister is filled with gas. The constant flow regulator will thus during dispensing be at or near the second position defining the minimum effective flow area. During continuous dispensing, the pressure in the canister will fall and in order to maintain the flow rate the constant flow regulator will during dispensing move towards the second position defining the maximum effective flow area. When the dispensing device is in the non-beverage dispensing position or when the beverage container is depleted, the constant flow regulator will be in the first position.

Brief description of the drawings

Fig 1 is a perspective view of a constant flow rate controller,
Fig 2 is a side cut-out view of a constant flow rate controller,
Fig 3 is a side cut-out view of a first embodiment of a flow control part,
Fig 4 is a perspective view of a second embodiment of a flow control part,
Fig 5 is a perspective view of a third embodiment of a flow control part,
Fig 6 is a side cut-out view of a fourth embodiment of a flow control part,
Fig 7 is a perspective view of the fourth embodiment of a flow control part,
Fig 8 is a perspective view of a beverage dispensing system.

Detailed description of the drawings

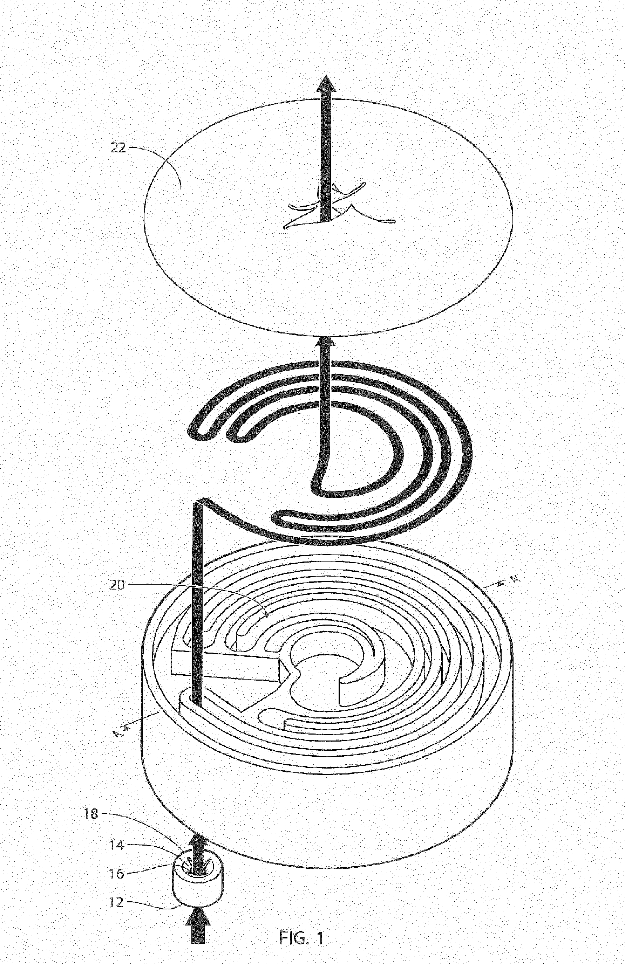

Fig 1 shows a perspective view of a constant flow rate controller 10. The constant flow rate controller 10 defines an inlet 12, an outlet 14 and an orifice 16. The constant flow rate controller comprises a flow control part 18 which will be explained in more detail in connection with the next figures. The outlet 14 is connected to a laminar flow conduit 20. The laminar flow conduit 20 has a meandering shape. The laminar flow conduit 20 is sealed by a rupturable membrane 22. In order to enable beverage dispensing, the rupturable membrane 22 should be pierced in the center in order to allow passage from the inlet 12 to the outside via the laminar flow conduit 20.

The flow path through the constant flow rate controller 10 during dispensing is shown by a black arrow. The inlet 12 of the constant flow rate controller 10 is connected to an inner space of the beverage container (not shown) optionally via a riser pipe. When the pressure difference between the inlet 12 and the outlet 14 is large, the flow control part 18 will cover a greater part of the orifice 16 such that the effective flow area through the constant flow rate controller 10 is small. When the pressure difference between the inlet 12 and the outlet 14 is small, the flow control part 18 will cover a smaller part of the orifice 16 such that the effective flow area through the constant flow rate controller 10 is large. In this way the flow rate through the constant flow rate controller 10 is approximately constant, i.e. independent of the pressure difference between the inlet 12 and the outlet 14.

The laminar flow conduit 20 will allow any turbulence which may have formed during the high velocity pass between the inlet 12 and the outlet 14 to decay and prevent the instant generation of large bubbles due to the relative small pressure gradient in the laminar flow conduit 20. The effective flow area of the laminar flow conduit 20 should be slightly larger than the effective flow area between the inlet 12 and the outlet 14. The length of the laminar flow conduit 20 should be significantly longer that the distance between the inlet 12 and the outlet 14 in order to allow a sufficient distance for minimizing the pressure gradient and turbulence formation. The exact dimensions of the constant low rate controller 10 are depending on various factors, such as type of beverage, shape and pressures used etc.

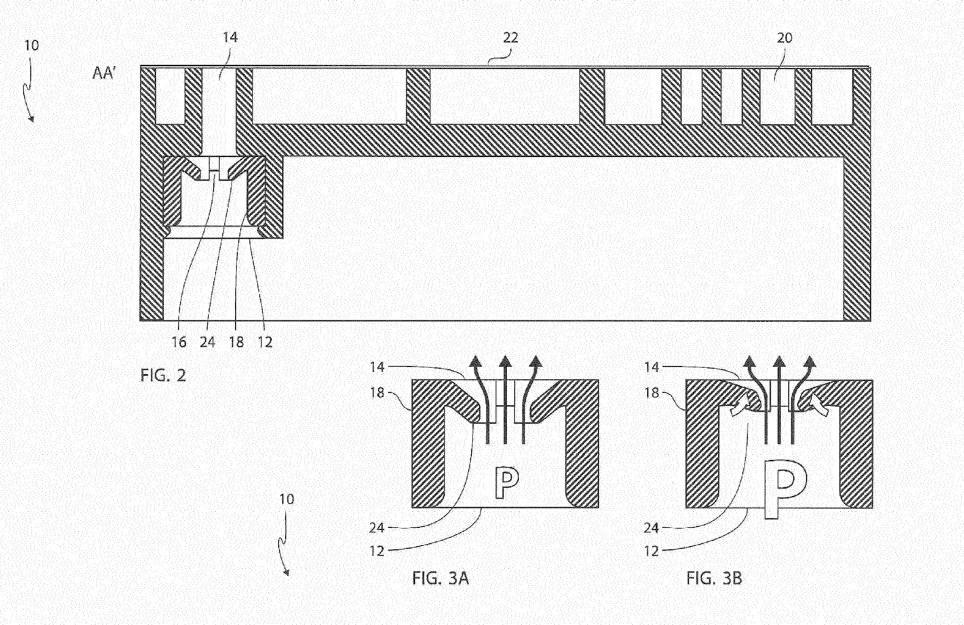

Fig 2 shows a side cut-out view of a constant flow rate controller 10 when assembled. The flow control part 18 comprises two flow control members 24 which in the present embodiment are constituted by inwardly (in direction of the beverage container) oriented elastic flaps. The constant flow rate controller 10 is preferably made or molded from plastics. The flow control conduit 20 is visible in the form of a channel. The flow control conduit 20 is sealed off in an upward direction by the rupturable membrane 22. It is contemplated that the flow control conduit 20 may also be closed off by a non-piercable plastic sheet except in the center region where access to the beverage is required.

Fig 3A shows a side cut-out view of a first embodiment of a flow control part 18 in the situation where beverage is dispensed having a lower pressure in the beverage container or when beverage dispensing is interrupted. In this case the elastic flow control members 24 will be relaxed and establish a large effective flow area at the orifice 16 since the pressure difference between the inlet and the outlet is low.

Fig 3B shows a side cut-out view of a first embodiment of a flow control part 18 in the situation where beverage is dispensed having a higher pressure in the beverage container. In this case the elastic flow control members 24 will be stressed towards the outlet and establish a small effective flow area at the orifice 16 since the pressure difference between the inlet and the outlet is high. This effect is shown by the white arrows, whereas the black arrows show the beverage flow.

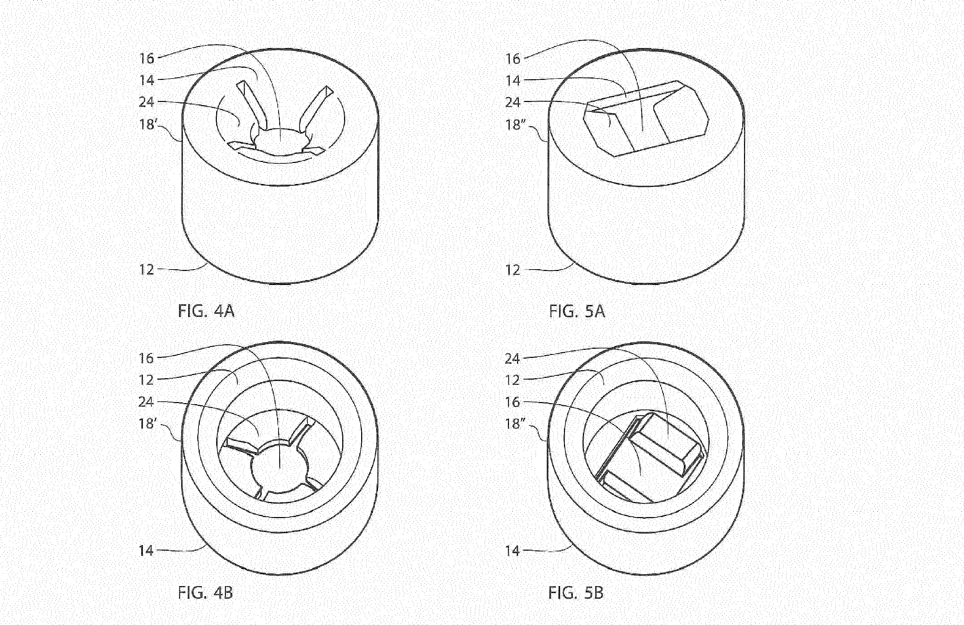

Fig 4A and B show a perspective front and rear view, respectively of a second embodiment of a flow control part 18'. The working principle is similar to the previous embodiment, except that the circular orifice 16 is covered by four elastic flow control members 24.

Fig 5A and B show a perspective front and rear view, respectively, of a third embodiment of a flow control part 18". The working principle is similar to the previous embodiment, except that the orifice 16 is rectangular and covered by two rectangular elastic flow control members 24.

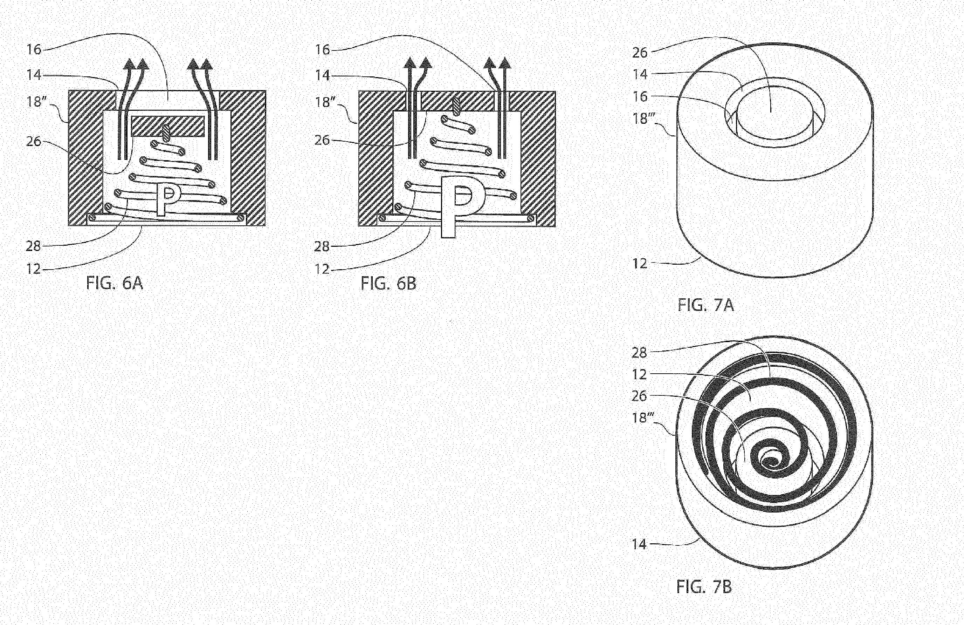

Fig 6A shows a side cut-out view of a fourth embodiment of a flow control part 18''' in the situation where beverage is dispensed having a lower pressure in the beverage container or when beverage dispensing is interrupted. The flow control part 18''' comprises an orifice 18 and a rigid flow control member 26. The rigid flow control member 26 is connected to a spring 28 which in the current situation is relaxed since the differential pressure between the inlet 12 and the outlet 14 is low. The beverage may flow through the orifice 16 as shown by the black arrows. The flow control part 18''' defines a large effective flow area.

Fig 6B shows a side cut-out view of a fourth embodiment of a flow control part 18''' in the situation where beverage is dispensed having a higher pressure in the beverage container. The large pressure difference between the inlet 12 and the outlet 14 results in a greater flow through the orifice 16 which causes the rigid flow control member 26 connected to a spring 28 to move towards the orifice 16 thereby stressing the spring 28. A a greater part of the orifice 16 is thereby covered by the rigid flow control member 26 and the flow control part 18''' thus defines a smaller effective flow area.

Fig 7A and B show a perspective front and rear view, respectively, of the fourth embodiment of a flow control part 18'''. The working principle is similar to the previous embodiments, except that the flow control member 26 is rigid and controlled by a spring 28.

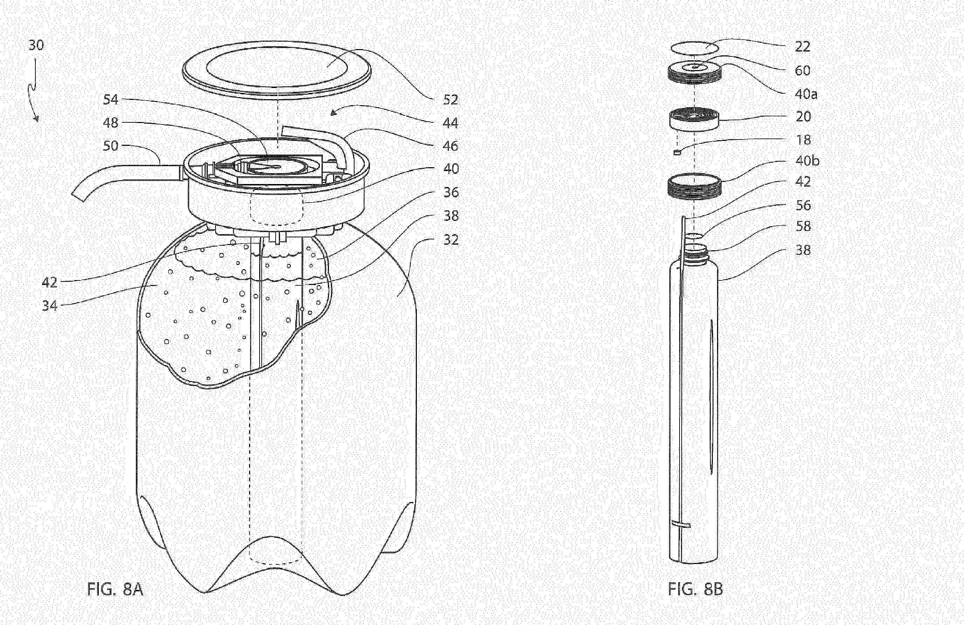

Fig 8 shows a perspective view of a beverage dispensing system 30. The beverage dispensing system comprises a beverage container 32. The beverage container 32 defines an inner space 34 filled with carbonated beverage. A head space 36 of CO2 gas is located above the inner space 34. The beverage container 32 further comprises a canister 38 filled with carbon dioxide. The canister 38 preferably includes a filler material. The canister 38 is in gaseous communication with the head space 36 of the container 32, preferably via capillary tubes (not shown) in order to avoid leakage of beverage into the canister 38. When the complete inner space 34 beverage has been substituted by gas, the head space 36 will fill the complete beverage container 32.

The canister 38 is sealed off by a lid 40 which also seals off the beverage container 32. A riser pipe 42 extends from the inner space 34 via the lid 40 to a dispensing device 44. The dispensing device 44 comprises a dispensing handle 46 which is controlling a dispensing valve 48. By pulling the dispensing handle 46, the dispensing valve 48 is operated from the non-beverage dispensing position, i.e. the valve is shut, to the beverage dispensing position, i.e. the valve is open allowing beverage to flow from the container 32 via the riser pipe 42, lid 40 and the dispensing device 44 to the outside of the beverage dispensing system 30. Optionally, a spout 50 may be used for directing the beverage from the valve 48 into a beverage glass (not shown). Further, also optional, a cover 52 may be used to protect the dispensing device 30 during transport. An activation mechanism 54 is used for activating beverage dispensing as described below.

Fig 8B shows a perspective view of the canister 38. The canister 38 comprises the riser pipe 42 which interconnects the inner space of the container and the flow control conduit 20. The lid 40 comprises a lid top 40a and a lid bottom 40b. The canister 30 is sealed to the lid bottom 40b by a sealing 52. Gaseous communication is provided between the interior of the canister 38 and the head space 36 of the container 32 by a capillary channel 58 which allows gas but not liquid to pass. The canister 38 comprises filler (not shown) of activated carbon which is capable of adsorbing sufficient CO2 gas to substitute the complete inner space 34. The flow control conduit 20 is enclosed between the lid bottom 40b and the lid top 40a. The flow control part 18 is located between the riser pipe 42 and the flow control conduit 20. The lid top 40a has an aperture 56 which is covered by a rupturable membrane 22.

In order to enable beverage dispensing, the user typically activates the activation mechanism which causes the dispensing device to penetrate the rupturable membrane 22 and allow beverage to flow from the inner space of the container to the dispensing device via the riser pipe 42, the flow control part 18 and the flow control conduit 20.

Many modifications of the preferred embodiments of the invention disclosed herein will readily occur to those skilled in the art. Accordingly, the invention is intended to include all structures that falls within the scope of the appending claims.

List of parts

10. Constant flow rate controller
12. Inlet
14. Outlet
16. Orifice
18. Flow control part
20. Flow control conduit
22. Rupturable membrane
24. Elastic flow control member
26. Rigid flow control member
28. Spring
30. Beverage dispensing system
32. Container
34. Inner space
36. Head space
38. Canister
40. Lid
42. Riser pipe
44. Dispensing device
46. Handle
48. Valve
50. Spout
52. Cover
54. Activation mechanism
56. Sealing
58. Capillary channel
60. Aperture

**Claims**

1. A beverage dispensing system for dispensing a carbonated beverage, said beverage dispensing system comprising:

   a beverage container defining an inner space for holding said carbonated beverage at an elevated pressure exceeding the ambient atmospheric pressure,
   a dispensing device for dispensing said beverage from said inner space of said beverage container, and
   a constant flow rate controller having an inlet in fluid communication with said inner space of said beverage container and an outlet in fluid communication with said dispensing device, said constant flow rate controller having a first position defining a maximum effective flow area between said inlet and said outlet and a second position defining a minimum effective flow area between said inlet and said outlet, said constant flow rate controller shifting gradually during dispensing beverage towards the second position with an increasing pressure difference between said inlet and said outlet and towards the first position with a decreasing pressure difference between said inlet and said outlet.

2. The beverage dispensing system according to claim 1, wherein said constant flow rate controller comprising an orifice and a flow controlling member partially covering said orifice, said flow controlling member being movable between said first position in which said flow controlling member and said orifice establish said maximum flow area between said inlet and said outlet and said second position in which said flow controlling member and said orifice establish said minimum flow area between said inlet and said outlet.

3. The beverage dispensing system according to claim 2, wherein said flow controlling member constitutes a spring loaded member being responsive to the pressure difference between said inlet and said outlet.

4. The beverage dispensing system according to claim 2, wherein said flow controlling member constitutes an elastic member being responsive to the pressure difference between said inlet and said outlet.

5. The beverage dispensing system according to claim 4, wherein said flow controlling member comprises further elastic members, preferably 1 further elastic member, alternatively more elastic members such as 5-50 or 2, 3 or 4 further elastic members.

**6.** The beverage dispensing system according to any of the claim 2-5, wherein said orifice defines a rectangular shape or altenatively a circular shape.

**7.** The beverage dispensing system according to any of the preceding claims, wherein said constant flow rate controller further comprising a beverage laminar flow conduit establishing fluid communication from said outlet of said constant flow rate controller to said dispensing device, said beverage laminar flow conduit defining an effective flow area being larger than said maximum effective flow area.

**8.** The beverage dispensing system according to claim 7, wherein said beverage laminar flow conduit defines a meandering shape.

**9.** The beverage dispensing system according any of the claims 7-8, wherein said beverage laminar flow conduit defines an effective flow area being 1.01 to 100, preferably 1.1 to 50, more preferably 1.2 to 20, most preferably 1.5 to 10 times larger than said maximum effective flow area or alternatively, 1.01, 1.1, 1.2 or 1.5 times larger than the maximum effective flow area.

**10.** The beverage dispensing system according any of the claims 7-9, wherein said beverage laminar flow conduit further defines a flow distance between said outlet and said dispensing device, said flow distance being at least 10, preferably 20, more preferably 50, most preferably 100, times larger the said diameter of said beverage laminar flow conduit.

**11.** The beverage dispensing system according to any of the preceding claims, wherein said dispensing device being sealed by a rupturable membrane, preferably an aluminum membrane or a plastic membrane.

**12.** The beverage dispensing system according to any of the preceding claims, wherein said dispensing device constituting a beverage tap for controlling the dispensing of said beverage.

**13.** The beverage dispensing system according to any of the preceding claims, wherein the effective flow area between said inlet and said outlet is inversely proportional to the pressure difference between said inlet and said outlet.

**14.** The beverage dispensing system according to any of the preceding claims, wherein said constant flow rate controller is made as a single molded plastic component.

**15.** A method of dispensing a carbonated beverage from a beverage container holding said carbonated beverage at an elevated pressure exceeding the ambient atmospheric pressure to a dispensing device, said method comprising:

providing a constant flow rate controller defining an inlet in fluid communication with said beverage and an outlet located opposite said inlet, and
dispensing said beverage thereby gradually decreasing said elevated pressure causing said constant flow rate controller to move from a second position defining a minimum flow area between said inlet and said outlet of said constant flow rate controller towards a first position defining a maximum flow area between said inlet and said outlet of said constant flow rate controller.

FIG. 1

FIG. 2

FIG. 3A

FIG. 3B

FIG. 4A

FIG. 5A

FIG. 4B

FIG. 5B

FIG. 7A

FIG. 7B

FIG. 6B

FIG. 6A

FIG. 8A

FIG. 8B

EP 2 786 960 A1

Europäisches
Patentamt

European
Patent Office

Office européen
des brevets

## EUROPEAN SEARCH REPORT

Application Number

EP 13 16 2501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 371 759 A1 (ANHEUSER BUSCH INBEV S A [BE]) 5 October 2011 (2011-10-05) * paragraphs [0003], [0006], [0027] - [0029]; figures * | 1,15 | INV. B67D1/12 B67D1/14 F16K15/06 G05D16/18 |
| X | GB 2 348 185 A (IMI CORNELIUS [GB]) 27 September 2000 (2000-09-27) * page 1, lines 17-24 * * page 4, line 20 - page 5, line 27; figures 1, 3 * | 1,2,15 | |
| A | KR 2009 0070553 A (NOVITA CO LTD [KR]) 1 July 2009 (2009-07-01) * abstract; figures * | 1,15 | |
| A | WO 2010/070531 A1 (KONINKL PHILIPS ELECTRONICS NV [NL]; VAN DER KOOI JOHANNES T [NL]; DUI) 24 June 2010 (2010-06-24) * page 2, line 23 - page 3, line 5; figures 2-6 * | 1,15 | |
| A | EP 2 336 077 A1 (ANHEUSER BUSCH INBEV S A [BE]) 22 June 2011 (2011-06-22) * paragraphs [0003], [0017], [0018], [0021]; figures 2-4 * | 1,15 | TECHNICAL FIELDS SEARCHED (IPC) B67D F16K G05D |
| A | DE 198 02 291 A1 (MOGLER GMBH & CO GEB [DE]) 5 August 1999 (1999-08-05) * column 1, lines 23-50; figures * | 1,15 | |

The present search report has been drawn up for all claims

| Place of search | Date of completion of the search | Examiner |
|---|---|---|
| Munich | 20 August 2013 | Müller, Claus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 13 16 2501

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2013

| Patent document cited in search report | | Publication date | Patent family member(s) | | Publication date |
|---|---|---|---|---|---|
| EP 2371759 | A1 | 05-10-2011 | CA | 2794235 A1 | 06-10-2011 |
| | | | CN | 102958825 A | 06-03-2013 |
| | | | EP | 2371759 A1 | 05-10-2011 |
| | | | EP | 2552822 A1 | 06-02-2013 |
| | | | US | 2013098946 A1 | 25-04-2013 |
| | | | WO | 2011120883 A1 | 06-10-2011 |
| GB 2348185 | A | 27-09-2000 | AT | 272571 T | 15-08-2004 |
| | | | AU | 3308800 A | 09-10-2000 |
| | | | DE | 60012710 D1 | 09-09-2004 |
| | | | DE | 60012710 T2 | 13-01-2005 |
| | | | EP | 1163185 A1 | 19-12-2001 |
| | | | GB | 2348185 A | 27-09-2000 |
| | | | JP | 2002540018 A | 26-11-2002 |
| | | | MX | PA01009537 A | 19-08-2003 |
| | | | US | 6474504 B1 | 05-11-2002 |
| | | | WO | 0056656 A1 | 28-09-2000 |
| KR 20090070553 | A | 01-07-2009 | NONE | | |
| WO 2010070531 | A1 | 24-06-2010 | NONE | | |
| EP 2336077 | A1 | 22-06-2011 | AU | 2010332815 A1 | 12-07-2012 |
| | | | CA | 2784691 A1 | 23-06-2011 |
| | | | CN | 102741152 A | 17-10-2012 |
| | | | EP | 2336077 A1 | 22-06-2011 |
| | | | EP | 2512974 A1 | 24-10-2012 |
| | | | US | 2012285998 A1 | 15-11-2012 |
| | | | WO | 2011073343 A1 | 23-06-2011 |
| DE 19802291 | A1 | 05-08-1999 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007019848 A
- WO 2007019849 A
- WO 2007019850 A
- WO 2007019851 A
- WO 2007019853 A

- WO 2011157786 A
- EP 1737759 A
- EP 1170247 A
- EP 1648813 B1
- DE 19802291